# NEW EUROPEAN PATENT SPECIFICATION

(11) **EP 0 238 702 B2**
(45) Date of publication and mention of the opposition decision: **08.04.1998**
(45) Mention of the grant of the patent: 18.12.1991
(21) Application number: 86104315.6
(22) Date of filing: 27.03.1986
(51) Int. Cl.: C08J 7/04, C08L 75/04, C08L 23/28, C09D 127/04, C09D 175/04

(54) **Direct coating composition for polyolefin moldings and use thereof**
Direktbeschichtungszusammensetzung für Polyolefinformteile und ihre Verwendung
Composition pour revêtement direct de pièces moulées de polyoléfines et son utilisation

(43) Date of publication of application: 30.09.1987
(73) Proprietor: Asahipen Corporation, Osaka-City Osaka (JP)
(72) Inventor: Nakajima, Jun, Dr., Kyoto City Kyoto (JP); Kitamura, Takao, Osaka City Osaka (JP)
(74) Representative: Lehn, Werner, Dipl.-Ing.

(56) References cited:
- JP-A-58 017 174
- JP-A-60 092 375
- US-A- 4 539 360
- PATENTS ABSTRACTS OF JAPAN, vol. 8, no. 255 (C-253)[1692], 21st November 1984
- PATENTS ABSTRACTS OF JAPAN, vol. 8, no. 114 (C-225)[1551], 26th May 1984
- PATENTS ABSTRACTS OF JAPAN, vol. 8, no. 71 (C-217)[1508], 3rd April 1984

## Description

### Summary of the Invention

This invention is concerned with a process for coating polyolefin moldings with a direct coating composition. The composition may be directly painted onto the polyolefin moldings, which may be for example bumpers, tyre protectors, rear boxes, front-grilles, etc; plastics components of motor vehicles made of polypropylene, polyethylene, propyleneethylene copolymer, without pretreatment, to form films which have excellent properties in adhesion, weather resistance, gasoline resistance and so on.

### Background of the Invention

In recent years, polyolefin moldings, i.e. plastics motorcycle-parts, automobile-parts and ordinary commodities have been widely molded out of polypropylene, polyethylene or propylene-ethylene copolymers instead of other resins.

Whereas these polyolefin moldings have good performance in anti-corrosion, mechanical strength, chemical resistance, hardness and so on, the said polyolefin moldings have defects of tendency to crack and a bad weather resistance after long term use.

These cracks caused in polyolefin moldings could not be repaired.

Therefore, plastics automobile parts such as bumpers, tyre protectors, rear boxes, front-grilles, etc. and toys which have superior anti-cracking properties are eagerly requested in the motorcycle or automobile industry world and commodities industry world.

Furthermore, the previous polyolefin motorcycle-parts and automobile-parts have a defect that the parts color is commonly distinguished from the motorcycle- or automobile-metal body color.

Generally, the color of polyolefin moldings is based on inorganic or organic pigments premixed into the resin before molding.

The variety of the plastics moldings color tone is thus unavoidably restricted with the lot size from the economical standpoint.

The coloring method by painting can select various color tone by the choice of pigments at will.

Whereas the color co-ordination between a body and the parts have usually been done during parts molding process, the color tone of moldings are not the purpose color.

Therefore, coating systems which can be directly painted on polyolefin moldings are eagerly requested in the motorcycle or automobile industry world.

Previously, there have, however, been no coating compositions which can be directly painted on the polyolefin moldings in a one step coating procedure without pretreatment of the polyolefin molding.

At present, generally speaking, the coating process of the polyolefin moldings are ;firstly surface pretreatment such as flame treatment, corona treatment, chrome sulfuric acid treatment, etc., secondly primer coating and finally top coating.

It has thus been impossible to paint on polyolefin moldings in a one step operation without pretreatment.

Furthermore, it has been difficult to get a sufficient performance in various properties, i.e. adhesiveness. chemical resistance, hardness, even after pre-treating or primer coating.

JP-A-59135231 discloses a direct coating composition for a polyolefin molding which consists essentially of a mixture of a chlorinated polyolefin resin and a polyurethane resin, a mixture of poor compatibility.

JP-A-59027968 discloses a coating composition for polyolefinic substrates which consists essentially of a chlorinated polyolefin-modified graft acrylic copolymer comprising hydroxyl groups and an isocyanate compound.

Prior to the present invention, no process has been known to form a stable mixture of a chlorinated polyolefin resin and a polyol compound in view of the poor compatability of these compounds.

### Objects of this Invention

The first object of this inventin is to provide a process for coating a polyolefin molding with a direct coating composition which comprises a main agent formed from a mixture of a chlorinated polyolefin resin and a compound having active-hydrogens which is capable of forming a urethane resin, and a curing agent mainly being isocyanated compounds.

The second object of this invention is to provide a process for making a film by direct painting on polyolefin moldings such as bumpers, tyre protectors, rear boxes, front-grilles, components of motor vehicles and toys without either pre-treating or primer coating, said films having excellent properties in adhesiveness, weather resistance, gasoline resistance, chemical resistance, etc.

A further object of this invention is to provide a process for coating a polyolefin molding with a direct coating composition which is capable of overcoming previous disadvantages.

Another object of this invention is to provide a process for coating polyolefin moldings with direct coating compositions with easiness of processing mechanically or economically, and with high productivity without deteriorating the working environment.

The present invention provides a process for coating a polyolefin molding according to claim 1. Preferably the chlorinated polyolefin is at least one of a chlorinated polypropylene resin, chlorinated polyethylene resin, chlorinated propylene-ethylene copolymer resin or a mixture of such resins.

The reason why chlorinated polyolefin resins with a chlorine content of 25 to 50% by weight are employed in this invention is as follows:

In the case of the use of chlorinated polyolefin resins with a chlorine content of more than 50% by weight, the film properties of the resulting coatings have many disadvantages. For example, they have poor adhesiveness, poor weather resistance and shock resistance, or have poor gasoline resistance.

On the other hand, if a chlorinated polyolefin resin is used with a chlorine content of less than 25% by weight, the resultant resin has poor solubility in organic solvents. The film properties of the resulting coatings have many disadvantages, for example, bad weather resistance caused by de-chlorination and lack in stable-viscosity at low temperature.

For these reasons, it is necessary to use chlorinated polyolefin resins with chlorine content of 25 to 50% by weight for obtaining excellent film performance which are sufficient for motorcycle-parts, automobile-parts and commodities.

In addition to the above, chlorinated polyolefin resins having an average molecular weight from 5000 to 50000 are employed in this invention for the following reasons:

In the case of the use of the chlorinated polyolefin resins having an average molecular weight of less than 5000, said coating compositions have many disadvantages.

For example, they have a low curing speed or poor blocking resistance and at the same time coating films which include them have also many disadvantages in crack resistance, weather resistance and in gasoline resistance.

And in the other case of the use of the chlorinated polyolefin resins having an average molecular weight over 50000, said coating compositions have disadvantages in the efficiency of coating operation, in poor solubility and compatibility with other resins, and at the same time film coats formed from such mixtures have also many disadvantages in cracking resistance, in weather resistance or in gasoline resistance.

On the contrary, when the film to which chlorinated polyolefin having an average molecular weight from 5000 to 50000 is excellent in enough to satisfy the specification as motorcycle-parts and automobile parts etc. with respect to weather resistance, gasoline resistance, anticracking etc.

The urethane resins to be mixed with the above-mentioned chlorinated polyolefin resins to form the main agent are acrylic polyol compounds, for example 2-hydroxyl ethyl acrylate monomer or prepolymer.

The mixing ratio of the above compound and the aforementioned chlorinated polyolefin resins is in the proportion of 2-10 to 1.

In this invention, the isocyanate curing agent is preferably selected from the group of 2,4-tolylene diisocyanate, 2,6-tolylene diisocyanate, 1,5-naphthyl diisocyanate, hexamethylene diisocyanate, isophoron diisocyanate and prepolymer of these isocyanate compounds.

When the main agent is to be used for making of direct coating composition, it will be sufficient for use that coloring pigments such as carbon black, titanium dioxide, cyanine blue, azo dyes etc., and additives, the other fillers and aromatic solvents, such as toluene, xylene and the like. Additives and the other fillers can be mixed therewith as occasion demands.

Two-liquid system which consists of a main agent having active-hydrogen compounds and an isocyanate compound as a curing agent is composed as for urethane resin being made by urethane reacting between active-hydrogen compounds and isocyanate compounds when coating layer painted on moldings is baking.

Chlorinated polyolefin resin being composed in the main agent is selected by the following reasons.

Chlorinated polyolefin resin of itself has only good property in adhesiveness to polyolefin moldings but many poor properties in weather resistance, hardness, chemical resistance, etc..

And urethane resin of itself has only poor property in adhesiveness to polyolefin moldings but many good properties in weather resistance, hardness, chemical resistance.

The mixture of chlorinated polyolefin resin and urethane resin has only the good properties of the individual components.

In this invention, the coating layer made from the above said direct coating composition consists of main agent, inorganic and/or organic pigment and curing agent and preferably has a thickness of 25 to 30 µm. The coating layer is baked by heating at 70 to 100 °C for 20 to 60 minutes after direct one step painting operation without any pretreatment.

Polyolefin moldings made by the general plastics producing methods, such as a compression mold method, a transfer mold method etc. are preferably used.

And the polyolefin resin for making moldings are selected from the polyolefin resin group consisting of polypropylene resin, polyethylene resin, propylene-ethylene copolymer resin and modified resin of these.

Now, the invention will be described by the most preferable embodiment.

### Example 1

A plastics front-grille for automobile was produced from polypropylene resin, the scale of which was 500mm in ave. height. 800mm in ave. width and 1800mm in max. length.

| Main Agent | |
|---|---|
| chlorinated polypropylene resin (average molecular weight 20000, chlorine content 50 weight %, solid proportion 25 weight % in toluene) | 100 weight parts |
| acryl polyol | 250 weight parts |
| (Trade name Desmophen®, produced by Sumitomo Bayer Ltd.) | |
| Carbon black | 60 weight parts |
| Toluene | 50 weight parts |

| Curing Agent | |
|---|---|
| curing agent (Desmodur® N 75,trade name of Bayer Ltd.) | 100 weight parts Lid.) |

According to the above formulation, two liquids were mixed and the admixture was directly painted without pretreatment on the above plastics front-grille surface with a film thickness of 30 µm. Baking was at 100°C for 60 minutes.

The properties of the surface layer given in Example 1 are shown hereinafter in Table 1.

In this connection, the measuring method of the properties will be described as follows: (Performance of film on Moldings)
Adhesion: measured by the cross-cut cellophane tape adhesion test in compliance with JIS K 5400.
Accelerated Weathering : measured by means of sunshine carbon weathering machine for the exposure time 500 hours in compliance with JIS K 5400.
Solubility in gasoline : measured by means of observation of the surface of the Sample on which regular gasoline was dropped after passing 1 hour.
Color co-ordination of the body and the parts : measured by means of observation the Body and the Parts Sample from 5m distance.

**Table 1**

| Performance of Film on Moldings | | | | |
|---|---|---|---|---|
| performance sample | adhesion | gasoline solubility | accelerate weathering | color co-ordination |
| Example 1 | 100/100 | nothing wrong | not changed | co-ordination |

Our invention has been described circumstantially hereinbefore in citing its various examples, although some plastics parts were given as such examples. However, it will be apparently understood that other many widely different embodiments of the invention may be made also referring to other plastics motorcycle-parts and automobile-parts within the scope of the appended claims.

Therefore, the invention is not limited to the specific embodiments thereof except as defined in the appended claims.

## Claims

1. A process for coating a polyolefin molding comprising the steps of:
(i) pre-mixing 21.8 parts by weight of an inorganic and/or organic pigment, and 100 parts by weight of a main agent formed from a mixture of a chlorinated polyolefin resin having a chlorine content of from 25 to 50% by weight and an average molecular weight of from 5,000 to 50,000, and an acrylic polyol containing active-hydrogens which is capable of forming a urethane resin wherein the mixing ratio of the acrylic polyol and the chlorinated polyolefin resin is from 2 to 10 : 1 by weight;
(ii) mixing the pre-mixture formed in step (i) with an isocyanate compound as a curing agent;
(iii) coating a layer of the mixture formed in step (ii) on the polyolefin molding; and
(iv) baking the coated layer at 70-100°C for 20-60 minutes.

2. A process according to Claim 1, wherein the polyolefin resin for forming the chlorinated polyolefin resin is selected from polypropylene resin, polyethylene resin, propylene-ethylene copolymer resin or a mixture thereof.

3. A process according to Claim 1 or Claim 2, wherein the curing agent is selected from at least one of 2,4-tolylene diisocyanate, 2,6-tolylene diisocyanate, 1,5-naphthyl diisocyanate, hexamethylene diisocyanate, isophoron diisocyanate and a prepolymer of these isocyanate compounds or prepolymer of these.

## Patentansprüche

1. Verfahren zur Beschichtung eines Polyolefin-Formteils, das die folgenden Schritte umfaßt:
(i) Vormischen von 21,8 Gew.-Teilen anorganisches und/oder organisches Pigment und 100 Gew.-Teilen eines Hauptbestandteils, der von einem Gemisch aus einem chlorierten Polyolefinharz, das einen Chlor-Gehalt von 25 bis 50 Gew.-% und ein durchschnittliches Molekulargewicht von 5 000 bis 50 000 hat, und einem Acrylpolyol, das aktive Wasserstoffatom enthält und das fähig ist, ein Urethanharz zu bilden, gebildet wird, wobei das Mischungsverhältnis Acrylpolyol zu chloriertem Polyolefinharz, bezogen auf das Gewicht, 2 bis 10:1 ist;
(ii) Vermischen der in Schritt (i) gebildeten Vormischung mit einer Isocyanat-Verbindung als Härtemittel;
(iii) Auftragen einer Schicht aus dem in Schritt (ii) gebildeten Gemisch auf das Poyolefin-Formteil; und
(iv) Härten der aufgetragenen Schicht für 20 bis 60 min bei 70 bis 100°C.

2. Verfahren nach Anspruch 1, wobei das Polyolefinharz zur Bildung des chlorierten Polyolefinharzes unter Polypropylenharz, Polyethylenharz, Propylen-Ethylen-Copolymerharz oder einem Gemisch der genannten ausgewählt wird.

3. Verfahren nach Anspruch 1 oder Anspruch 2, wobei das Härtemittel aus den folgenden ausgewählt wird: 2,4-Tolylendiisocyanat, 2,6-Tolylendiisocyanat, 1,5-Naphthyldiisocyanat, Hexamethylendiisocyanat, Isophorondiisocyanat und ein Prepolymer dieser Isocyanat-Verbindungen oder ein Prepolymer der genannten.

## Revendications

1. Procédé pour revêtir une pièce moulée en polyoléfine comprenant les étapes de :
(i) prémélange de 21,8 parties en poids d'un pigment inorganique et/ou organique et de 100 parties en poids d'un agent principal formé à partir d'un mélange d'une résine de polyoléfine chlorée ayant une teneur en chlore de 25 à 50 % en poids et un poids moléculaire moyenne de 5 000 à 50 000, et d'un polyol acrylique contenant des hydrogènes actifs, qui est capable de former une résine d'uréthane, le rapport de mélange du polyol acrylique et de la résine de polyoléfine chlorée étant de 2 à 10:1 en poids ;
(ii) mélange du prémélange formé dans l'étape (i) avec un composé isocyanate comme agent durcisseur ;
(iii) application en revêtement d'une couche du mélange formé dans l'étape (ii) sur la pièce moulée en polyoléfine ; et
(iv) cuisson de la couche appliquée en revêtement à 70-100°C pendant 20-60 min.

2. Procédé selon la revendication 1, dans lequel la résine de polyoléfine pour former la résine de polyoléfine chlorée est choisie parmi une résine de polypropylène, une résine de polyéthylène, une résine de copolymère propylène-éthylène ou un mélange de celles-ci.

3. Procédé selon la revendication 1 ou la revendication 2, dans lequel l'agent durcisseur est choisi parmi au moins une substance parmi le diisocyanate de 2,4-tolylène, le diisocyanate de 2,6-tolylène, le diisocyanate de 1,5-naphtyle, le diisocyanate d'hexaméthylène, le diisocyanate d'isophorone et un prépolymène de ces composés isocyanates ou prépolymère de ceux-ci.
